# EUROPÄISCHE PATENTSCHRIFT

(11) **EP 0 536 477 B1**
(45) Veröffentlichungstag und Bekanntmachung des Hinweises auf die Patenterteilung: **16.10.1996**
(21) Anmeldenummer: 92111102.7
(22) Anmeldetag: 01.07.1992
(51) Int. Cl.: B60N 2/30

(54) **Fahrzeugsitz**
Vehicle seat
Siège de véhicule

(30) Priorität: 13.08.1991 DE 4126699
(43) Veröffentlichungstag der Anmeldung: 14.04.1993
(73) Patentinhaber: MERCEDES-BENZ AG, 70327 Stuttgart (DE)
(72) Erfinder: Hienz, Johann, Dipl.-Ing., W-7030 Böblingen (DE); Kalt, Hans-Peter. Dipl.-Ing., W-7036 Schönaich (DE); van de Werve Ruigroh, Klaus, W-7032 Sindelfingen (DE)

(56) Entgegenhaltungen:
- BE-A- 690 141
- DE-A- 1 505 735
- US-A- 2 116 366
- US-A- 3 933 330
- US-A- 4 720 143

## Beschreibung

Die Erfindung betrifft einen Fahrzeugsitz mit Sitzkissen und Rückenlehne, insbesondere Fahrernebensitz in Omnibussen, gemäß dem Oberbegriff des Patentanspruchs 1.

Bei einem bekannten Fahrersitz dieser Art (DE-OS 1 505 735) ist das den Sitzkissenunterrahmen mit dem Fahrzeugboden verbindende Sitzgestell als Gelenkviereck ausgebildet. Die vordere Seite des Gelenkvierecks bildet eine mit dem Fahrzeugboden verbundene vertikale Tragkonsole, die obere Seite eine mit dem Sitzkissenunterrahmen starr verbundene, nach vorn unten zur Tragkonsole hin geneigte Strebe, die hintere Seite ein unteres Verbindungsstück der Rückenlehne und die untere Seite ein vom Verbindungsstück zur Tragkonsole parallel zur oberen Strebe verlaufende zweite Strebe. In der Sitzvorklappstellung liegen die beiden Streben des Gelenkvierecks bei aufgerichtetem Sitzkissen und aufrechter Rückenlehne aneinander, wobei das Oberpolster des Sitzkissens leicht schräg gegen das Armaturenbrett des Omnibusses angeklappt ist und die Rückenlehne in vertikaler Richtung nach oben strebt. In der Sitzvorklappstellung wird somit ein beschränkter Durchstieg zum Mittelgang der Fahrgastbestuhlung frei und das Einsteigen der Fahrgäste ermöglicht.

Der Erfindung liegt die Aufgabe zugrunde, einen Fahrzeugsitz der eingangs genannten Art so zu konstruieren, daß in der Sitzvorklappstellung dessen Sitzkissen unter das Armaturenbrett eintaucht und nur noch die Rückenlehne an dem Armaturenbrett anliegt, um dadurch eine größere Einstiegsfreiheit für die Fahrgäste zu gewinnen.

Die Aufgabe ist bei einem Fahrzeugsitz der im Oberbegriff des Anspruchs 1 definierten Gattung erfindungsgemäß durch die Merkmale im Kennzeichenteil des Anspruchs 1 gelöst.

Bei dem erfindungsgemäßen Fahrzeugsitz wird beim Vorklappen des Fahrzeugsitzes durch das erfindungsgemäße Teleskop die Höhe des Sitzkissens automatisch so weit verringert, daß das Sitzkissen problemlos in den Freiraum unterhalb des Armaturenbretts einschwenkt. Nur noch die Rückenlehne, die gegenüber der Dicke des Sitzkissens eine wesentlich geringere Tiefe aufweist, liegt am Armaturenbrett an. Der für die Fahrgäste zur Verfügung stehende Einstiegsbereich ist damit wesentlich größer. Mit dem Einschwenken des Sitzkissens unter das Armaturenbrett ist gleichzeitig der Vorteil verbunden, daß zwischen Sitzkissen und Rückenlehne kein Verstellmechanismus vorgesehen werden muß, der die etwa 90° Ausrichtung der Rückenlehne zum Sitzkissen in der Sitzgebrauchsstellung in eine etwa 180° Ausrichtung in der Sitzklappstellung umwandelt. Dadurch vereinfacht sich die Sitzgestellkonstruktion erheblich.

Der erfindungsgemäße Fahrzeugsitz ist konstruktiv relativ einfach aufgebaut und äußerst robust. Die Herstellungskosten sind wegen der einfachen Kinematik zur Höhenverstellung des Sitzkissens beim Schwenkvorgang relativ niedrig. Eine Verriegelungsvorrichtung sorgt für eine definierte Rastposition des Fahrzeugsitzes in seiner Gebrauchsstellung und blockiert gleichzeitig jegliche Teleskopwirkung bei Sitzbelastung. Vorteilhafte Ausführungsformen des erfindungsgemäßen Fahrzeugsitzes mit zweckmäßigen Weiterbildungen und Ausgestaltungen der Erfindung sind in den weiteren Patentansprüchen angegeben.

Die automatische Lagenänderung des üblicherweise aus Teleskopstange und Teleskophülse bestehenden Teleskops bei der Sitzschwenkung wird gemäß einer bevorzugten Ausführungsform der Erfindung dadurch realisiert, daß die die Teleskopstange längsverschieblich aufnehmende Teleskophülse mit ihrem einen Ende an dem Fahrzeugboden angelenkt ist und die den Sitzkissenunterrahmen tragende Teleskopstange an einem Seil befestigt ist, das endseitig in der Teleskophülse festgelegt und über zwei im Vertikalabstand am Fahrzeugboden gehaltene Seilrollen derart geführt ist, daß die Teleskopstange durch die Schenkbewegung der Teleskophülse in die Sitzgebrauchsstellung aus der Teleskophülse ausgeschoben und durch die Schwenkbewegung der Teleskophülse in die Sitzvorklappstellung in die Teleskophülse eingezogen wird. Ein Seilspanner sorgt dafür, daß das Seil stets straff gespannt bleibt und auf die Teleskopstange beim Überführen des Sitzes in die Sitzklappstellung eine geringe Zugkraft ausgeübt wird.

Die Erfindung ist anhand eines in der Zeichnung dargestellten Ausführungsbeispiels im folgenden näher beschrieben. Es zeigen:
- Fig. 1: eine Seitenansicht eines Fahrzeugsitzes in Sitzgebrauchsstellung (ausgezogen) und Sitzvorklappstellung (strichpunktiert), schematisch dargestellt,
- Fig. 2: eine Prinzipskizze eines Teleskop-Sitzgestells des Fahrzeugsitzes in Fig. 1,
- Fig. 3 bis 5: jeweils einen Schnitt längs der Linie III-III (Fig. 3) bzw. IV-IV (Fig. 4) bzw. V-V (Fig. 5) in Fig. 2 bei einer konstruktiven Ausführungsform des Teleskop-Sitzgestells in Fig. 1 bzw. 2,
- Fig. 6: eine Seitenansicht einer Verriegelungsvorrichtung des Teleskop-Sitzgestells gemäß Fig. 3 - 5 in zwei Verriegelungspositionen bei Sitzvorklappstellung (ausgezogen) und Sitzgebrauchsstellung (strichpunktiert),
- Fig. 7: eine Draufsicht der Verriegelungsvorrichtung in Sitzvorklappstellung gemäß Pfeil VII in Fig. 6.

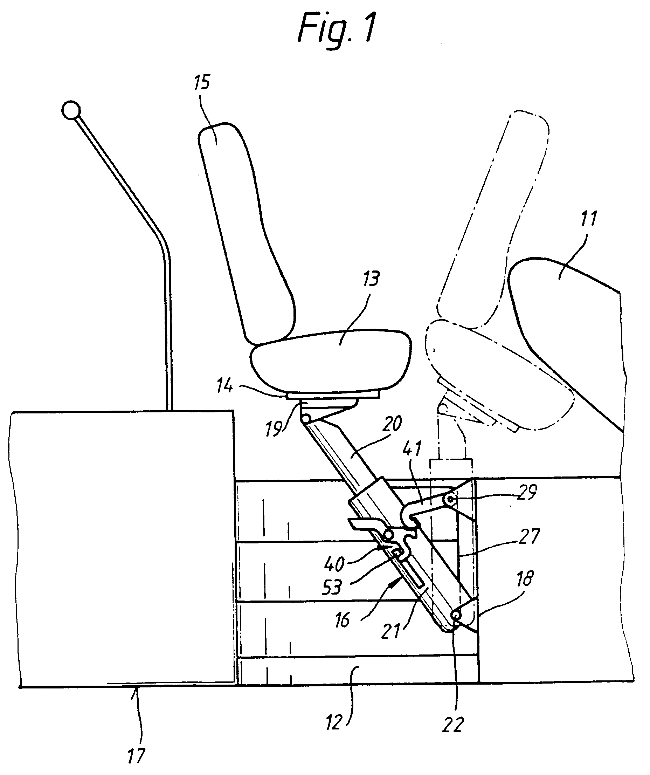

Der in Fig. 1 schematisch in Seitenansicht skizzierte Fahrzeugsitz wird als sog. Fahrernebensitz in einem Omnibus verwendet, der ausschnittweise mit seinem Armaturenbrett 11 und seinem Einstieg 12 angedeutet ist. Der Fahrernebensitz ist im Einstiegsbereich des Omnibusses angeordnet und kann zur Freigabe des Einstiegs 12 nach vorn zum Armaturenbrett 11 hin weggeschwenkt werden. Der Fahrzeugsitz besteht aus einem Sitzkissen 13, das auf einem Sitzkissenunterrahmen 14 befestigt ist, und aus einer Rückenlehne 15, die ebenfalls am Sitzkissenunterrahmen 14 befestigt ist, vorzugsweise mit einer Neigungseinstellmöglichkeit, sowie einem Sitzgestell 16, das den Sitzkissenunterrahmen 14 schwenkbeweglich mit dem Fahrzeugboden 17, genauer mit einer bodenfesten vertikalen Tragkonsole 18 verbindet.

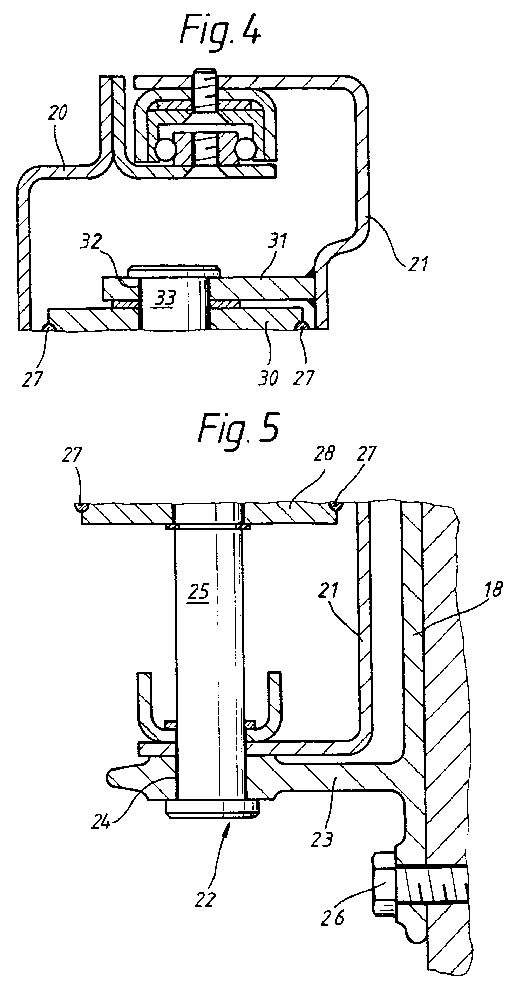

Das Sitzgestell 16 ist als Teleskop, bestehend aus einer Teleskopstange 20 und einer diese längsverschieblich aufnehmenden Teleskophülse 21, ausgebildet. Die Teleskopstange 20 ist mit ihrem aus der Teleskophülse 21 hervorstehenden Ende unter Zwischenschaltung eines Drehtellers 19 an dem Sitzkissenunterrahmen 14 befestigt. Die Teleskophülse 21 ist an ihrem sitzkissenfernen Ende an der Tragkonsole 18 angelenkt, wobei der Anlenkpunkt 22 so gelegt ist, daß er in der Sitzgebrauchsstellung weit vor dem Verbindungspunkt von Sitzkissenunterrahmen 14 und Teleskopstange 20 und in der Sitzvorklappstellung (in Fig. 1 strichpunktiert dargestellt) etwa vertikal unterhalb dieses Verbindungspunktes liegt. Die konstruktive Ausführung des Anlenkpunktes 22 ist in Fig. 5 dargestellt: Von der Tragkonsole 18 stehen einstückig und in Abstand voneinander zwei Haltestege 23 vor, von welchen in Fig. 5 nur der eine Haltesteg 23 dargestellt ist. In jedem Haltesteg 23 ist ein Lagerloch 24 vorgesehen. Durch die beiden Lagerlöcher 24 ist ein Drehbolzen 25 geführt, auf dem die Teleskophülse 21 drehbeweglich sitzt. Die Tragkonsole 18 ist mittels Schrauben 26 (Fig. 5) an einer vom Fahrzeugboden 17 vertikal wegstehenden Wand des Einstiegs 12 befestigt.

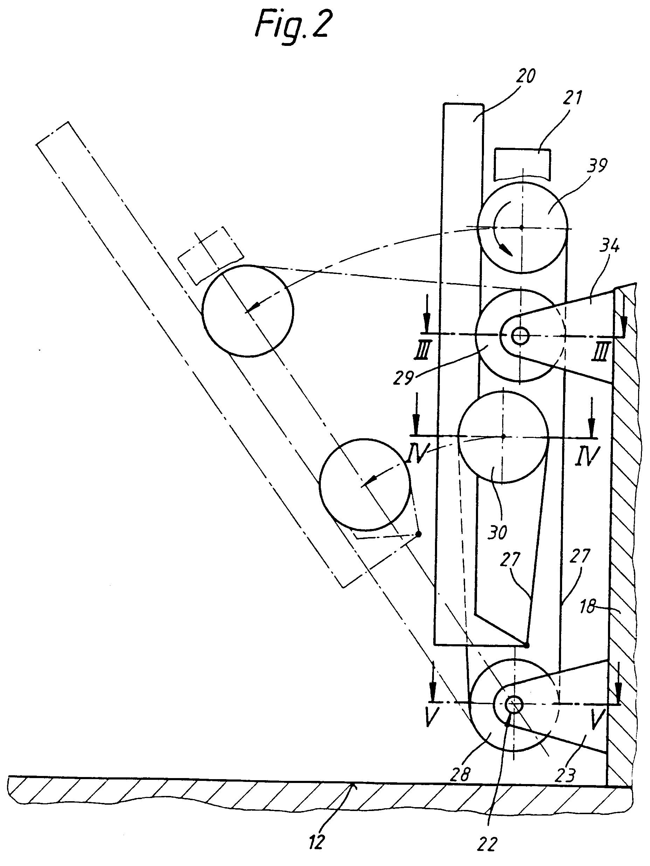

Wie aus Fig. 1 ersichtlich, ist das Teleskop-Sitzgestell 16 so ausgebildet, daß es bei der Schwenkbewegung des Fahrzeugsitzes seine Länge ändert, und zwar wird seine Länge beim Überführen des Sitzes in die Sitzvorklappstellung (in Fig. 1 strichpunktiert dargestellt) verkleinert und beim Überführen in die Sitzgebrauchstellung (in Fig. 1 ausgezogen dargestellt) vergrößert. Dies wird dadurch bewerkstelligt - wie dies in Fig. 2 schematisch angedeutet ist -, daß die Teleskopstange 20 von einem Seil 27 gehalten ist, das endseitig in der Teleskophülse 21 festliegt und über zwei im Vertikalabstand von der Tragkonsole 18 abgestützt gehaltene Seilrollen 28,29, von denen die Seilrolle 28 im Anlenkpunkt 22 der Teleskophülse 21 liegt, derart geführt ist, daß die Teleskopstange 20 durch die Schwenkbewegung der Teleskophülse 21 in die strichpunktiert angedeutete Sitzgebrauchsstellung aus der Teleskophülse 21 ausgeschoben und durch die Schwenkbewegung der Teleskophülse 21 in die ausgezogen dargestellte Sitzvorklappstellung in die Teleskophülse 21 eingezogen wird, wobei die Hubbewegung der Teleskopstange 20 dadurch erreicht wird, daß ausgehend von dem sitzkissenfernen Ende der Teleskopstange 20 das Seil 27 über eine in der Teleskophülse 21 drehbar gelagerte erste Seilrolle 30 und über die beiden an der Tragkonsole 18 vertikal übereinander angeordneten beiden Seilrollen 28,29 geführt und endseitig nahe dem oberen Ende der Teleskophülse 21 an dieser befestigt ist.

Die konstruktive Ausführung der Lagerung der Seilrolle 30 in der Teleskophülse 21 ist aus dem in Fig. 4 dargestellten Querschnitt gemäß Schnittlinie IV-IV in Fig. 2 zu sehen. Von der Teleskophülse 21 stehen zwei Traglaschen 31 rechtwinklig vor, von denen in Fig. 4 nur die eine Traglasche 31 zu sehen ist. Jede Traglasche 31 ist mi[ einem Lagerloch 32 versehen. In den beiden Lagerlöchern 32 der Traglaschen 31 ist ein Bolzen 33 gehalten, auf dem die Seilrolle 30 drehbeweglich sitzt. Das die Seilrolle 30 mit etwas mehr als 180° umschlingende Seil ist wiederum mit 27 bezeichnet.

Wie aus Fig. 5 zu erkennen ist, sitzt die Seilrolle 28 auf dem Bolzen 25, mittels welchem die Teleskophülse 21 an der Tragkonsole 18 schwenkbeweglich gehalten wird.

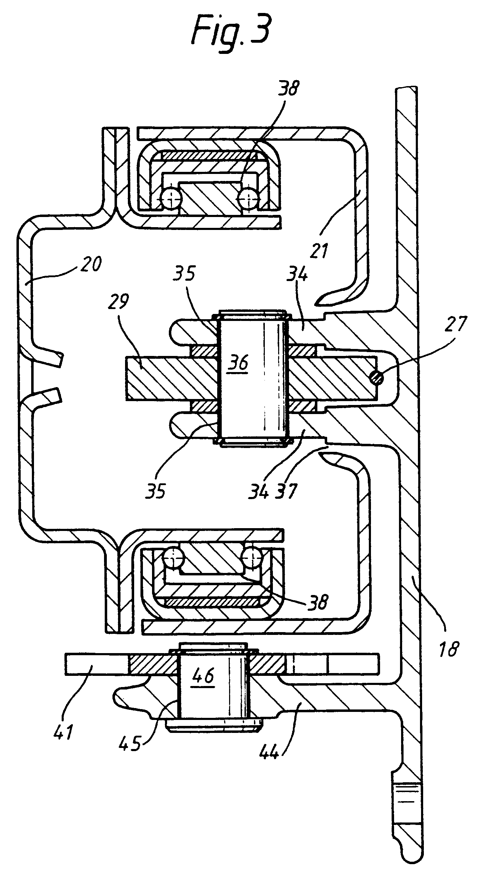

Die Schnittdarstellung in Fig. 3, die einen Querschnitt längs der Linie III-III in Fig. 2 zeigt, verdeutlicht die konstruktive Ausführung der Halterung der Seilrolle 29 oberhalb der Seilrolle 28. Von der Tragkonsole 18 stehen rechtwinklig zwei einstückige Haltestege 34 mit je einem Lagerloch 35 vor. In den Lagerlöchern 35 ist wiederum ein Bolzen 36 gehalten, auf dem die Seilrolle 29 drehbeweglich sitzt. Das die Seilrolle 29 bereichsweise umlaufende Seil ist wiederum mit 27 gekennzeichnet.

Aus Fig. 3 ist ebenfalls die konstruktive Ausführung von Teleskophülse 21 und Teleskopstange 20 zu sehen. Damit die Teleskophülse 21 in der Sitzvorklappstellung über die Seilrolle 29 mit Haltestegen 34 hinwegschwenken kann, ist sie in der der Tragkonsole 18 zugekehrten Seite mit einem Längsschlitz 37 versehen, durch welchen hindurch die Seilrolle 29 mit Haltestege 34 in das Innere der Teleskophülse 21 eintauchen kann (Fig. 3). Die ebenso wie die Teleskophülse 21 im Querschnitt U-förmig ausgebildete Teleskopstange 20 greift auf der gegenüberliegenden Seite der Teleskophülse 21 in letztere hinein und ist über ihre U-Schenkel mittels Kugellager 38 an den beiden U-Schenkeln der Teleskophülse 21 längsverschieblich geführt.

Anhand der schematischen Darstellung in Fig. 2 läßt sich ohne weiteres die von dem Seilzug bewirkte Teleskopbetätigung beim Schwenken des Fahrzeugsitzes verdeutlichen. In der Sitzvorklappstellung ist die Teleskopstange 20 durch das Gewicht von Sitzkissen 13 und Rückenlehne 15 maximal in die Teleskophülse 21 eingetaucht. Dieser Eintauchweg ist so bemessen, daß sich das Sitzkissen 13 in den unterhalb des Armaturenbretts 11 sich befindlichen Hohlraum plazieren kann. Wird nunmehr der Fahrzeugsitz in seine Sitzgebrauchsstellung überführt, so schwenkt die Hülse 21 von der Tragkonsole 18 weg, und da das Seilende am oberen Ende der Teleskophülse 21 befestigt ist, zieht die Teleskophülse 21 das Seil 27 über die Seilrolle 29 von der Tragkonsole 18 weg. Durch die begrenzte Seillänge führt dieser Seilauszug über die Seilrollen 28 und 30 zu einer Verkürzung des zwischen dem unteren Ende der Teleskopstange 20 und der Seilrolle 30 sich befindlichen Seilabschnittes, wodurch die Teleskopstange 20 aus der Teleskophülse 21 ausgeschoben wird. In der Sitzgebrauchsstellung hat die Teleskopstange 20 dabei ihren maximalen Ausschub erhalten, und das Sitzkissen 13 befindet sich in der gewünschten Höhe über dem Fahrzeugboden 17. Wird der Fahrzeugsitz wieder zum Armaturenbrett 11 hin vorgeklappt, so verkürzt sich der Seilabschnitt zwischen der Seilrolle 29 und dem oberen Ende der Teleskophülse 21. Entsprechend der Verkürzung dieses Seilabschnittes kann die Teleskopstange 20 infolge Schwerkrafteinfluß in der Teleskophülse 21 zunehmend nach unten gleiten. Damit das Seil 27 stets gestrafft bleibt und eine gewisse Zugkraft zum Überwinden der Reibung auf die Teleskopstange 20 ausgeübt wird, greift am Seil 27 ein Seilspanner an. Im beschriebenen Ausführungsbeispiel wird dieser Seilspanner durch eine in der Teleskophülse 21 gelagerte Seilaufwickelrolle 39 realisiert, die in Aufwickelrichtung mit einer Aufwickelfeder vorgespannt ist und in Abwickelrichtung nach einem kurzen Seilauszugsweg gegen einen nicht dargestellten Anschlag läuft. Dadurch, daß die Seilaufwickelrolle 39 in ihre Aufwickelrichtung federvorgespannt ist, wirkt auf das Seil 27 eine Zugkraft, die das Seil 27 auch beim Vorschwenken des Fahrzeugsitzes straff hält. In einer modifizierten Ausführungsform kann anstelle der das Ende des Seils 27 aufnehmenden Seilaufwickelrolle 39 das Seilende starr an der Teleskophülse 21 befestigt und der Seilspanner als ein an der Tragkonsole 18 schwenkbar befestigter Hebel ausgebildet werden, der unter Federkraft und über eine drehbare Rolle an dem zwischen den beiden Seilrollen 28,29 aufgespannten Seilabschnitt quer dazu anliegt.

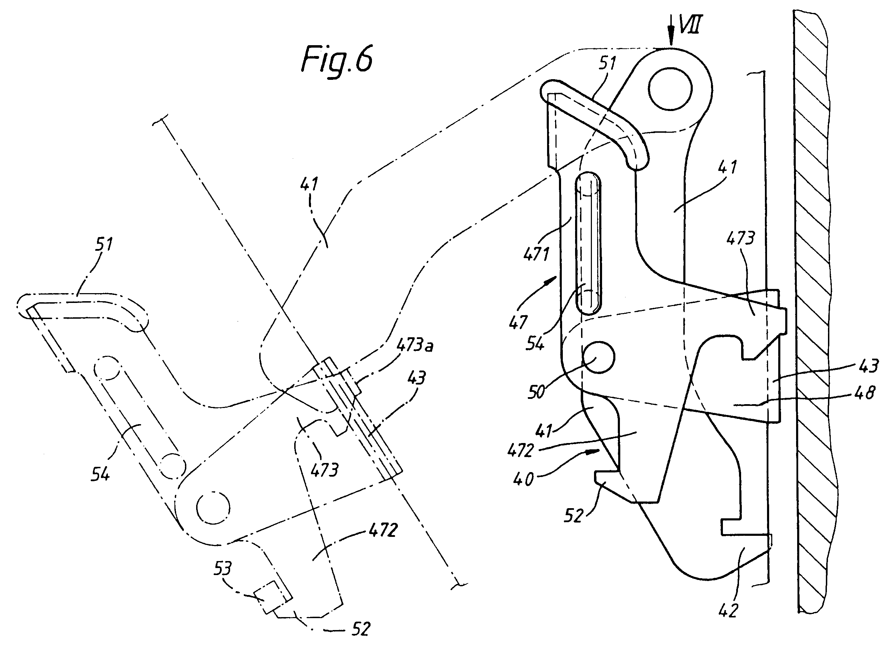

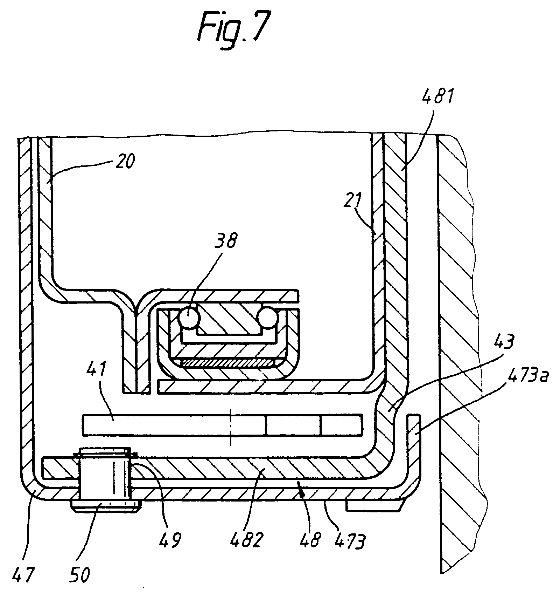

In der Sitzgebrauchsstellung ist der Fahrzeugsitz mittels einer in Fig. 1 schematisch und in Fig. 6 im konstruktiven Detail dargestellten Verriegelungsvorrichtung 40 in zweifacher Hinsicht verriegelt: Zum einen wird die Teleskophülse 21 in einer vorbestimmten Winkellage zur Tragkonsole 18 arretiert und zum andern wird die Teleskopstange 21 gegen Axialverschiebung in der Teleskophülse 21 verriegelt. Damit ist der Fahrzeugsitz in der Sitzgebrauchsstellung einwandfrei fixiert und kann unbedenklich belastet werden. Konstruktive Details der Verriegelungsvorrichtung 40 sind in Seitenansicht in Fig. 6 und in Draufsicht in Fig. 7 dargestellt.

Die Verriegelungsvorrichtung 40 weist einen Klinkenhebel 41 auf, der an einem Ende an der Tragkonsole 18, und zwar im Drehpunkt der oberen Seilrolle 29, schwenkbeweglich gelagert ist und an seinem anderen Ende eine Klinke 42 trägt, die in der Sitzgebrauchsstellung einen an der Teleskophülse 21 befestigten Raststeg 43 übergreift. Die Halterung des Klinkenhebels 41 ist aus Fig. 3 zu erkennen. Die Tragkonsole 18 besitzt hier eine einstückig vorspringende Haltelasche 44 mit einer Bohrung 45, in welcher der Klinkenhebel 41 mittels eines Bolzens 46 schwenkbeweglich befestigt ist. Weiterhin gehört zu der Verriegelungsvorrichtung 40 ein Verriegelungshebel 47, der an der Teleskophülse 21 schwenkbeweglich gelagert ist und drei rechtwinklig voneinander wegstehende Hebelarme 471,472 und 473 aufweist. Wie aus der in Fig. 7 ausschnittweise dargestellten Draufsicht gemäß Pfeil VII in Fig. 6 hervorgeht, ist mit der Teleskophülse 21 ein etwa U-förmiger Tragwinkel 48 fest verbunden, der mit seinem Steg 481 an der der Tragkonsole 18 zugekehrten Seite der Teleskophülse 21 anliegt und hier befestigt ist und mit seinem einen Schenkel 482 mit Abstand die Teleskophülse 21 seitlich übergreift (vergl. auch Fig. 6). Nahe dem vorderen freien Ende des Schenkels 482 ist in einer dort vorhandenen Bohrung 49 der Verriegelungshebel 47 mittels eines Bolzens 50 schwenkbeweglich gehalten. Der Übergang vom Steg 481 zum Schenkel 482 des Tragwinkels 48 bildet den Raststeg 43, über welchen in der Sitzgebrauchsstellung (Fig. 6 strichpunktiert gezeichnet) die Klinke 42 des Klinkenhebels 41 zur Arretierung der Teleskophülse 21 greift.

Der eine Hebelarm 471 des Verriegelungshebels 47 trägt am freien Ende auf der dem Einstieg 12 zugekehrten Seite eine Fußplatte 51, die zum Aufsetzen eines Fußes zwecks Schwenken des Verriegelungshebels 47 und damit zum Entriegeln der Verriegelungsvorrichtung 40 durch eine Person, die aus dem Omnibus aussteigen will, dient. Auf der vom Einstieg 12 abgekehrten Seite des Hebelarms 471 ist ein Handgriff 54 vorgesehen, der zum Entriegeln der Verriegelungsvorrichtung 40 und Schwenken des Fahrzeugsitzes in die Sitzvorklappstellung durch eine Person, die in den Omnibus einsteigen will, dient. Der andere Hebelarm 472 trägt endseitig eine Verriegelungsnase 52, die in der Verriegelungsstellung des Verriegelungshebels 47 hinter einen Nocken 53 an der Teleskopstange 20 derart greift, daß ein Verschieben der Teleskopstange 20 nach unten, also in Richtung Einschieben in die Teleskophülse 21, verhindert ist. Der dritte Hebelarm 473 ist endseitig rechtwinklig abgebogen und verläuft mit seinem abgewinkelten Ende 473a unmittelbar unterhalb des in Verriegelungsstellung sich befindlichen Klinkenhebels 41, und zwar derart, daß er auf der Unterseite des Klinkenhebels 41 anliegt. Wird nunmehr zur Entriegelung der Verriegelungsvorrichtung 40 (in Fig. 6 strichpunktiert dargestellt) der Verriegelungshebel 47 durch Aufsetzen eines Fußes auf die Fußplatte 51 in Uhrzeigerrichtung geschwenkt, so schwenkt die Verriegelungsnase 52 weg von dem Nocken 53 und der abgewinkelte Abschnitt 473a des Hebelarms 473 hebt den Klinkenhebel 41 entgegen Uhrzeigersinn soweit an, daß die Klinke 42 den Raststeg 43 freigibt. Damit kann der Fahrzeugsitz in Vorklappstellung bewegt werden, wobei durch den vorstehend beschriebenen Mechanismus des Seilzuges die von dem Hebelarm 472 freigegebene Teleskopstange 20 in die Teleskophülse 21 eingezogen wird. Die Lage von Klinkenhebel 41 und Verriegelungshebel 47 in der Sitzvorklappstellung ist in Fig. 6 links dargestellt. Durch eine hier nicht gezeigte Modifizierung des Verriegelungshebels 47 kann mit diesem die Teleskophülse 21 auch zusätzlich an der Tragkonsole 18 verriegelt werden. Wird der Fahrzeugsitz wieder in seine Sitzgebrauchsstellung zurückgeschwenkt, so wird über den Tragwinkel 48, und zwar dessen Raststeg 43 zwischen Steg 481 und Schenkel 482 der Klinkenhebel 41 mitgenommen, wobei letzterer entgegen Uhrzeigersinn schwenkt, bis die Klinke 42 in der Sitzgebrauchsstellung selbsttätig in den Raststeg 43 einfällt.

## Patentansprüche

1. Fahrzeugsitz, insbesondere Fahrernebensitz in Omnibussen, mit einem Sitzkissen mit Sitzkissenunterrahmen, einer am Sitzkissenunterrahmen gehaltenen Rückenlehne und mit einem Sitzgestell, das den Sitzkissenunterrahmen so an dem Fahrzeugboden anlenkt, daß der Fahrzeugsitz zwecks Freigabe eines Einstiegs im Fahrzeug aus einer Sitzgebrauchsstellung nach vorn zum Armaturenbrett des Fahrzeugs in eine Sitzvorklappstellung schwenkbar ist,
**dadurch gekennzeichnet,**
daß das Sitzgestell (16) als Teleskop (20,21) ausgebildet ist, das seine Länge beim Überführen in die Sitzvorklappstellung verkleinert und beim Überführen in die Sitzgebrauchsstellung vergrößert.

2. Sitz nach Anspruch 1,
**dadurch gekennzeichnet,**
daß das Teleskop eine endseitig mit dem Sitzkissenunterrahmen (14) verbundene Teleskopstange (20) und eine die Teleskopstange (20) längsverschieblich aufnehmende Teleskophülse (21) aufweist, daß die Teleskophülse (21) an ihrem sitzkissenfernen Ende fahrzeugfest so angelenkt ist, daß der Anlenkpunkt (22) in der Sitzgebrauchsstellung mit Abstand vor dem Sitzkissen (13) und in der Sitzvorklappstellung etwa vertikal unterhalb des Sitzkissens (13) liegt, daß die Teleskopstange (20) an einem Seil (27) befestigt ist, das endseitig in der Teleskophülse (21) festgelegt und über zwei im Vertikalabstand am Fahrzeugboden (17) gehaltene Seilrollen (28,29), von denen eine im Anlenkpunkt (22) der Teleskophülse (21) liegt, derart geführt ist, daß die Teleskopstange (20) durch Schwenken der Teleskophülse (21) in die Sitzgebrauchsstellung aus der Teleskophülse (21) ausgeschoben und durch Schwenken der Teleskophülse (21) in die Sitzvorklappenstellung in die Teleskophülse (21) eingezogen wird.

3. Sitz nach Anspruch 2,
**dadurch gekennzeichnet,**
daß das Seil (27) ausgehend von dem sitzkissenfernen Ende der Teleskopstange (20) über eine in der Teleskophülse (21) drehbar gelagerte erste Seilrolle (30), über die untere und dann über die obere der beiden am Fahrzeugboden (17) gehaltenen Seilrollen (28,29) geführt und an oder nahe dem oberen Ende der Teleskophülse (21) befestigt ist.

4. Sitz nach Anspruch 2 oder 3,
**dadurch gekennzeichnet,**
daß am Seil (27) ein Seilspanner kontinuierlich angreift.

5. Sitz nach Anspruch 4,
**dadurch gekennzeichnet,**
daß der Seilspanner von einer in Seilaufwickelrichtung vorgespannten Seilaufwickelrolle (39) gebildet ist, die in der Teleskophülse (21) drehbar gelagert ist und die endseitige Festlegung des Seils (27) bildet, und daß die Seilaufwickelrolle (39) mit einer Seilauszugsbegrenzung versehen ist.

6. Sitz nach einem der Ansprüche 1 - 5,
**gekennzeichnet durch**
eine Verriegelungsvorrichtung (40), die in der Sitzgebrauchsstellung einerseits die Teleskophülse (21) gegen Verschwenkung und andererseits die Teleskopstange (20) gegen Axialverschiebung, zumindest gegen Einschieben in die Teleskophülse (21), festlegt.

7. Sitz nach Anspruch 6,
**dadurch gekennzeichnet,**
daß die Verriegelungsvorrichtung (40) zugleich zur Festlegung der Teleskophülse (21) in der Sitzvorklappstellung dient.

8. Sitz nach Anspruch 6 oder 7,
**dadurch gekennzeichnet,**
daß die Verriegelungsvorrichtung (40) einen am Fahrzeugboden (17), vorzugsweise im Drehpunkt der oberen am Fahrzeugboden gehaltenen Seilrolle (29), schwenkbeweglich gelagerten Klinkenhebel (41), der in der Sitzgebrauchsstellung mit einer schwenkpunktfernen Klinke (42) einen Raststeg (43) an der Teleskophülse (21) übergreift, und einen an der Teleskophülse (21) schwenkbeweglich gelagerten Verriegelungshebel (47) aufweist, der mit einer Verriegelungsnase (52) einen Verriegelungsnocken (53) an der Teleskopstange (20) hintergreift und bei seinem Schwenken einerseits den Verriegelungsnocken (53) freigibt und andererseits die Klinke (42) des Klinkenhebels (41) aus dem Raststeg (43) aushebt.

9. Sitz nach Anspruch 8,
**dadurch gekennzeichnet,**
daß an dem einen Hebelarm (471) des Verriegelungshebels (47) eine Fußplatte (51) ausgebildet ist.

10. Sitz nach Anspruch 8 oder 9,
**dadurch gekennzeichnet,**
daß an dem einen Hebelarm (471) des Verriegelungshebels (47) ein Handgriff (54) ausgebildet ist.

11. Sitz nach einem der Ansprüche 1 - 10,
**dadurch gekennzeichnet,**
daß zwischen Sitzkissenunterrahmen (14) und Teleskopstange (20) ein Drehteller (19) angeordnet ist.

## Claims

1. A vehicle seat, particularly the seat beside a bus driver, with a seat cushion with a frame under the seat cushion, a back rest supported on the under frame and with a seat framework which so articulates the under frame on the vehicle floor that in order to provide clearance for boarding the vehicle, the vehicle seat can be pivoted out of a usable position forwards towards the dashboard of the vehicle and into a forwardly folded position, characterised in that the seat framework (16) is of telescopic construction (20, 21) so that its length is reduced when it is moved into the forwardly folded position and is increased when it is moved into the usable position.

2. A seat according to claim 1, characterised in that the telescopic structure comprises a telescopic rod (20) connected at its end to the frame (14) under the seat cushion and a telescopic sleeve (21) which accommodates the telescopic rod (20) for longitudinal displacement and in that the telescopic sleeve (21) is at its end remote from the seat cushion so articulated on the vehicle that, in the usable position, the point (22) of articulation is at a distance in front of the seat cushion (13) while in the forwardly folded position of the seat, it is approximately vertically below the seat cushion (13) and in that the telescopic rod (20) is fixed to a cable (27) the end of which is fixed in the telescopic sleeve (21) and is so guided by two cable pulleys (28, 29) maintained at a vertical distance from each other on the vehicle floor (17) and of which one is at the point (22) of articulation of the telescopic sleeve (21) that the telescopic rod (20) is pushed out of the telescopic sleeve (21) by pivoting of the telescopic sleeve (21) into the usable position of the seat and is retracted into the telescopic sleeve (21) when the telescopic sleeve (21) is pivoted into the forwardly folded position of the seat.

3. A seat according to claim 2, characterised in that starting from the end of the telescopic rod (20) which is remote from the seat cushion, the cable (27) passes over a first cable pulley (30) rotatably mounted in the telescopic sleeve (21), over the lower and then over the upper of the two cable pulleys (28, 29) mounted on the vehicle floor (17) and is fixed at or close to the upper end of the telescopic sleeve (21).

4. A seat according to claim 2 or 3, characterised in that a cable tensioning device continuously engages the cable (27).

5. A seat according to claim 4, characterised in that the cable tensioning device is constituted by a cable take-up pulley (39) initially tensioned in the direction of cable take-up and which is rotatably mounted in the telescopic sleeve (21) and which constitutes the terminal fixing of the cable (27) and in that the cable take-up pulley (39) has a device limiting the amount of cable pull-out.

6. A seat according to one of claims 1 to 5, characterised by an interlocking device (40) which, in the usable position of the seat on the one hand, secures the telescopic sleeve (21) against pivoting and on the other secures the telescopic rod (20) against axial displacement at least against retraction into the telescopic sleeve (21).

7. A seat according to claim 6, characterised in that the interlocking device (40) serves at the same time to fix the telescopic sleeve (21) in the forwardly folded position of the seat.

8. A seat according to claim 6 or 7, characterised in that the interlocking device (40) comprises a ratchet lever (41) mounted for pivoting movement on the vehicle floor (17), preferably at the pivot point of the upper cable pulley (29) which is mounted on the vehicle floor, said ratchet lever (41), in the usable position of the seat, having remote from the pivot point a detent (42) which engages over an engaging web (43) on the telescopic sleeve (21), and further comprising, mounted for pivoting movement on the telescopic sleeve (21), an interlocking lever (47) having a locking nose (52) which engages behind a projection (53) on the telescopic rod (20) and which, upon being pivoted, on the one hand releases the projection (53) and on the other lifts the detent (42) of the ratchet lever (41) out of the web (43).

9. A seat according to claim 8, characterised in that a foot plate (51) is constructed on one lever arm (471) of the interlocking lever (47).

10. A seat according to claim 8 or 9, characterised in that a handle (54) is constructed on the one lever arm (471) of the interlocking lever (47).

11. A seat according to one of claims 1 to 10, characterised in that a rotary plate (19) is disposed between the under frame (14) of the seat cushion and the telescopic rod (20).

## Revendications

1. Siège de véhicule, notamment siège de passager avant dans des autobus, comportant un coussin de siège pourvu d'un support, un dossier fixé sur le support du coussin de siège et un bâti de siège, qui relie de façon articulée le support du coussin de siège au plancher du véhicule de telle sorte que, pour libérer la montée dans le véhicule, on puisse faire pivoter le siège du véhicule en direction du tableau de bord du véhicule, depuis une position d'utilisation du siège jusqu'à une position du siège rabattu vers l'avant, caractérisé en ce que le bâti de siège (16) est agencé sous la forme d'un système télescopique (20,21), dont la longueur diminue lors du passage dans la position du siège rabattu vers l'avant et augmente lors du passage à la position d'utilisation du siège.

2. Siège selon la revendication 1, caractérisé en ce que le système télescopique comporte une tige télescopique (20), qui est reliée par une extrémité au support (14) du coussin de siège et un manchon télescopique (21) qui loge avec possibilité de déplacement longitudinal la tige télescopique (20), que le manchon télescopique (21) est articulé, d'une manière solidaire du véhicule, au niveau de son extrémité éloignée du coussin du siège de telle sorte que le point d'articulation (22) soit situé à une certaine distance en avant du coussin (13) du siège lorsque le siège est dans sa position d'utilisation, et approximativement verticalement au-dessous du coussin (13) du siège lorsque le siège est dans sa position rabattue vers l'avant, que la tige télescopique (20) est fixée à un câble (27), qui est fixé, par une extrémité, dans le manchon télescopique (21) et est guidé au moyen de deux poulies à câble (28,29), fixées, en étant séparées par une certaine distance verticale, sur le plancher (17) du véhicule et dont l'une est située au niveau du point d'articulation (22) du manchon télescopique (21), de telle sorte que la tige télescopique (20) coulisse vers l'extérieur du manchon télescopique (21) du fait d'un basculement de ce dernier à la position d'utilisation du siège, et se rétracte dans le manchon télescopique (21) du fait d'un basculement de ce dernier à la position du siège rabattu vers l'avant.

3. Siège selon la revendication 2, caractérisé en ce que le câble (27) est guidé, à partir de l'extrémité de la tige télescopique (20) éloignée du coussin du siège, sur une première poulie à câble (30) montée rotative sur le manchon télescopique (21), et sur la poulie inférieure, puis sur la poulie supérieure parmi les deux poulies à câble (28,29) fixées sur le plancher (17) du véhicule et est fixé sur ou à proximité de l'extrémité supérieure du manchon télescopique (21).

4. Siège selon la revendication 2 ou 3, caractérisé en ce qu'un tendeur de câble est raccordé en permanence au câble (27).

5. Siège selon la revendication 4, caractérisé en ce que le tendeur de câble est formé par un galet (39) d'enroulement du câble, qui est précontraint dans le sens d'enroulement du câble et qui est monté rotatif dans le manchon télescopique (21) et forme l'élément de fixation d'extrémité du câble (27) et que le galet (29) d'enroulement du câble est pourvu d'un système de limitation d'extraction du câble.

6. Siège selon l'une des revendications 1-5, caractérisé par un dispositif de verrouillage (40) qui, dans la position d'utilisation du siège, bloque d'une part le manchon télescopique (21) contre un basculement et d'autre part la tige télescopique (20) contre un déplacement axial, au moins à l'encontre de son coulissement vers l'intérieur du manchon télescopique (21).

7. Siège selon la revendication 6, caractérisé en ce que le dispositif de verrouillage (40) sert simultanément à fixer le manchon télescopique (21) dans la position de basculement du siège vers l'avant.

8. Siège selon la revendication 6 ou 7, caractérisé en ce que le dispositif de verrouillage (40) possède un levier à cliquet (41) qui est monté de manière à pouvoir basculer sur le plancher (17) du véhicule, de préférence au niveau du centre de rotation de la poulie à câble supérieure (29) fixée au plancher du véhicule, et qui, lorsque le siège est dans la position d'utilisation, s'engage par un cliquet (42) éloigné du centre de pivotement, sur une barrette d'encliquetage (43) située sur le manchon télescopique (21), et un levier de verrouillage (47) monté de manière à pouvoir basculer sur le manchon télescopique (21) et qui, par un bec de verrouillage (52), s'engage derrière un ergot de verrouillage (53) situé sur la tige télescopique (20) et, lors de son basculement, d'une part libère l'ergot de verrouillage (53) et d'autre part dégage le cliquet (42) du levier à cliquet (41) de la barrette d'encliquetage (43).

9. Siège selon la revendication 8, caractérisé en ce qu'une plaque formant appui-pied (51) est formée sur un bras (471) du levier de verrouillage (47).

10. Siège selon la revendication 8 ou 9, caractérisé en ce qu'une poignée (54) est formée sur un bras (471) du levier de verrouillage (47).

11. Siège selon l'une des revendications 1-10, caractérisé en ce qu'un plateau rotatif (19) est disposé entre le support (14) du coussin du siège et la tige télescopique (20).
